# EUROPEAN PATENT SPECIFICATION

(11) **EP 2 589 709 B1**
(45) Date of publication and mention of the grant of the patent: **02.08.2023**
(21) Application number: 12191290.1
(22) Date of filing: 05.11.2012
(51) Int. Cl.: E02F 9/22, E02F 9/20

(54) **CONTROL DEVICE FOR A REMOTE-CONTROLLED, ELECTRICALLY-DRIVEN WORK MACHINE**
STEUERUNGSVORRICHTUNG FÜR EINE FERNGESTEUERTE, ELEKTRISCH ANGETRIEBENE ARBEITSMASCHINE
DISPOSITIF DE TÉLÉCOMMANDE POUR MACHINE DE TRAVAIL ÉLECTRIQUE

(30) Priority: 07.11.2011 SE 1151042
(43) Date of publication of application: 08.05.2013
(73) Proprietor: Brokk Aktiebolag, 931 27 Skelleftea (SE)
(72) Inventor: BYSTEDT, Gunnar, 931 91 Skellefteå (SE); DANIELSSON, Arne, 931 64 Skellefteå (SE)
(74) Representative: Zacco Sweden AB

(56) References cited:
- WO-A1-2008/080266
- WO-A1-2010/085184
- US-A1- 2010 314 182
- US-A1- 2011 173 963
- US-B2- 7 890 235

## Description

The present invention concerns a remote-controlled, electrically driven machine. Working machines of the specified kind are known in the art as for example from the document US7890235.

A remote-controlled work machine of the present type generally includes a chassis with an upper part and a lower part. The upper part is mounted on bearings on the lower part in a manner that allows rotation, for oscillation in a horizontal plane around a vertical axis, and it supports a manoeuvrable arm that is provided at its end with a quick-release coupling for the support of various types of tool. The lower part of the work machine is provided with a propulsion means that includes continuous tracks. This type of work machine is intended for various types of task and for specific industrial applications, not only indoors but also outdoors. An operator walks beside the machine and controls its various movements with a control unit that is supported on the body of the operator by a harness or similar. The work machine has various types of working mode that can be selected through the control unit. The operator is in connection with the machine through the control unit by cable or in a wireless manner, for example through Bluetooth or radio control. The control unit comprises two control levers and a series of button and knobs that through their influence and settings can cause the drive units and the manoeuvrable arm of the work machine to carry out the desired motions. The work machine can be set into various functional or working modes through the control unit. Exchange of working mode takes place when the control unit is set into what is known as "setup mode", whereby the selected working mode is displayed with the aid of symbols that are illuminated on the control unit. By setting the work machine into various working modes, the work machine can carry out a number of different motions with only the two control levers. The work machine is powered by electricity and is supplied with power through a power cable that is connected to an electrical grid. Energy in the form of a hydraulic medium under pressure is distributed with the aid of an electrically powered pump to the various operational devices of the work machine through valves of the type known as "electrohydraulic" valves. It in normal that the standardised CAN-system (where "CAN" is an acronym for "Controller Area Network") is used for work machines of this type. The CAN-system is computer-based and uses an electrical control and monitoring system with a low-level protocol for nodes and modules, whereby communication between the units that are components of the hydraulic system takes place over bus-based connections. The electric motor that is used to drive the pump device of the work machine is normally of three-phase, low-voltage type, with a rated voltage of 380-500 V and a frequency or 50 or 60 Hz.

To facilitate understanding of the following, it is reminded that the energy that is transferred by hydraulic systems is calculated in general as the fluid pressure P (N/m²) multiplied by the volume of flow Q (m³/s). The efficiency η of a hydraulic system is defined as the power output (Watt) divided by the power input, and for conventional systems this lies in the interval 0.90-0.75. Thus the hydraulic medium constitutes an energy carrier, whereby the pump is normally dimensioned based on the energy requirements of the various consumers, i.e. the energy required to drive the various operational devices of the work machine for setting and manoeuvring the machine parts will determine the dimensions of the hydraulic system. To this is added the energy requirements for driving a tool supported by the manoeuvrable arm, which means that the pump is normally selected, with respect to the total energy requirement of the work vehicle, with a suitable degree of excess capacity in order to be able to drive the tool.

When the work machine is to be taken into use at the intended location, it is not seldom that the problem arises that the location in question lacks an electricity distribution grid for low voltage that can supply the required power to the work machine, i.e. the grid provides the required grid voltage, such as 380-400 V, but cannot supply the grid current that the work machine requires. For example, it is not seldom that the problem arises that the electricity distribution grid available at the location is limited such that it offers only a main fuse rating of 16 A while the work machine requires a considerably higher fuse rating, for example 32 A, in order for it to be possible to use it. Thus, starting to use the work machine is considerably delayed, or in the worst case made impossible, in those cases in which the electricity distribution grid at the location is assessed, quite simply, to be unable to supply the current required while following the safety requirements in force. It should be understood that it is extremely disruptive if the work machine cannot be taken into use at the location immediately, also in those cases in which it is possible to modify or adapt the electricity distribution grid such that it is able to supply the current required to the work machine. It should be understood that the requirement for greater grid current and thus higher fuse rating than the rating available at the relevant location of the electricity distribution grid not only involves increases in cost as such, but also places considerably greater demands on the external electrical grid, with demands on the required conductor area, protective conductors, etc., that is to provide current to the electricity distribution grid at the location.

One purpose of the present invention, therefore, is to achieve a remote-controlled work machine of the type described above that eliminates the problems described above and makes it possible to use the work machine at a work location immediately, also in those cases in which the electricity distribution grid at the location is not adapted to supply, nor has the capacity to supply, the current required. The purpose of the invention is achieved through the work machine being given the features and characteristics that are specified in claim 1.

The significant idea on which the invention is based consists of arranging for the hydraulic drive system of the work machine the possibility of two alternative operating conditions with the selection of an operating mode with a limited power whereby the volume of flow to the operational devices of the work machine is limited by adjusting the parameters of the control curves that the hydraulic system uses to regulate the opening of control valves for the passage of the flow of hydraulic fluid to the operational devices. As a result of the choice of operating mode with limited power, the work machine will function exactly as normally with the required working pressure in the hydraulic system, but the operational devices will carry out their control and actuator functions with a somewhat lower speed through the reduced volume of flow to the consumers. In one aspect of the present disclosure is provided a remote-controlled, electrically driven work machine according to claim 1.

The remote controlled electrically driven work machine will be described below in more detail with reference to the attached drawings, of which:
Figure 1 shows a side view of a remote-controlled, electrically driven work machine according to the invention that supports a tool at the end of its manoeuvrable arm in the form of a hydraulic hammer, and that is remotely controlled by an operator who walks next to the work machine,
Figure 2 shows schematically a circuit diagram of a hydraulic system that is a component of a remotely controlled, electrically driven work machine according to the present invention,
Figure 3 shows in more detail the functional principle of a hydraulic system that is a component of the present work machine and its associated regulating structure for the adjustment of parameters of the hydraulic control circuit of the work machine through selection of suitable valve-control curves in order to limit the volume of flow to the operational devices of the work machine,
Figure 4A shows a perspective view from above of a control unit, such as it is seen by an operator during operation of the work machine,
Figure 4B shows in the form of a summary the functions of the control unit in the working mode and symbols for setting the work machine from normal operation to an operating condition that has limited power.

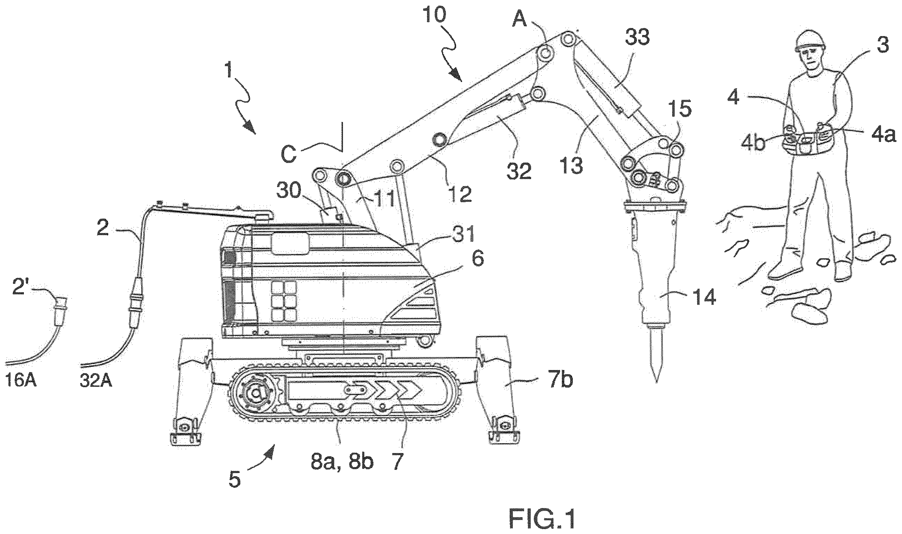

Figure 1 shows a remote-controlled, electrically driven work machine 1 designed as a demolition robot that is supplied with power through a cable 2. The work machine requires energy, and in order to be able to supply this with the required electrical power the electricity distribution grid supplies a grid current of 32 A. The grid is equipped also with fuses in order to be able to satisfy such a power requirement. The reference number 2' is used to denote a cable from the electricity distribution grid that can supply only a limited grid current, in this case 16 A. It should thus be realised that this alternative electrical grid cannot supply the amount of energy that the work machine requires, and that any attempt to connect the work machine to the said second electrical grid and operate it, using the power cable 2', is futile, since the 16 A fuses would blow.

A remote-controlled work machine of the present type is manufactured and sold under the trademark "BROKK", and at such a work machine an operator 3 walks beside the machine and controls and operates it by means of a portable control unit 4 or remote-control unit that is carried on the body by means of a belt or harness. The control unit 4 comprises two control levers, one of which 4a is located at the left and the other of which 4b is located at the right, and the control unit has a series of buttons and knobs that through their influence and settings can cause the work machine to carry out the desired motions, or through the input of data the work machine is provided with the required instructions. The work machine 1 generally comprises a chassis 5 with an upper part 6 and a lower part 7. The upper part 6 is mounted to rotate in bearings on the lower part 7 for oscillation in a horizontal plane around a vertical axis C. The lower part 7 of the work machine 1 is provided with a propulsion means 8a that includes continuous tracks 8b. The work machine has a number of support legs 7b for lifting the work machine from a surface.

The work machine 1 that has been described is somewhat simplified and is illustrated with fewer components than is normal, in order to make the sketch clear. The work machine 1 has a manoeuvrable arm 10 that is supported at the rotatable upper part 6 and includes four hydraulic functions for the manoeuvring of the arm, which functions include, when viewed from the chassis of the work machine, pivoting of a number of mutually jointed arm sections 11, 12, 13. A tool 14 is attached at the end of the arm by what is known as a "quick-release coupling" 15. The said arm sections 11, 12, 13 pivot relative to each other around essentially horizontal axes A.

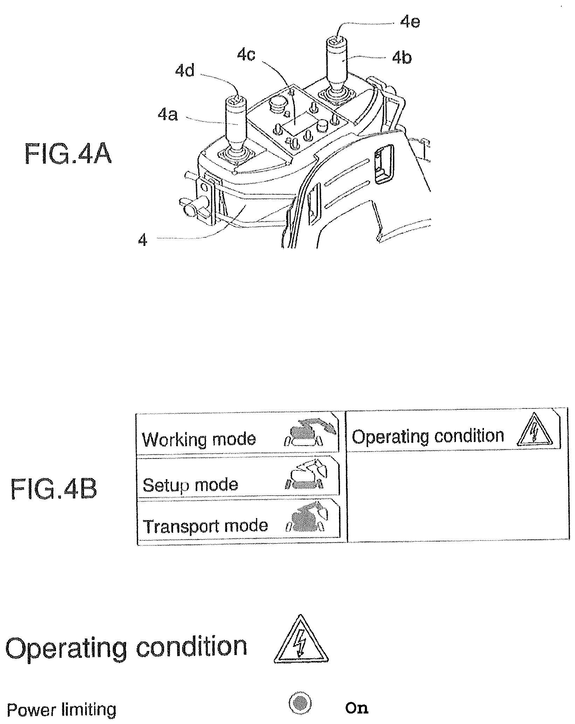

As is made most clear by Figures 1 and 4A, the operator 3 is in connection with the work machine through the control unit 4 by cable or in a wireless manner, for example through Bluetooth or radio control. The work machine 1 can be set through the control unit 4 into different working modes as is illustrated in Figure 4B. The control unit 4 is set into what is known as "setup mode" during the exchange of the working mode. Exchange of working mode can take place only when the control unit 4 is in the said setup mode, whereby the selected working mode is displayed with the aid of symbols that are illuminated on a screen 4c or display on the control unit 4. According to the present invention it is also possible to select in the said setup mode an operating condition with a power limitation, which condition can be activated by setting its mode to "On" or "Off'. The volume of flow of the hydraulic medium to the operational devices of the work machine is reduced in this power-limiting mode. The fact that the power-limiting mode has been activated, in the "On" mode, is indicated on the display 4c of the control unit 4.

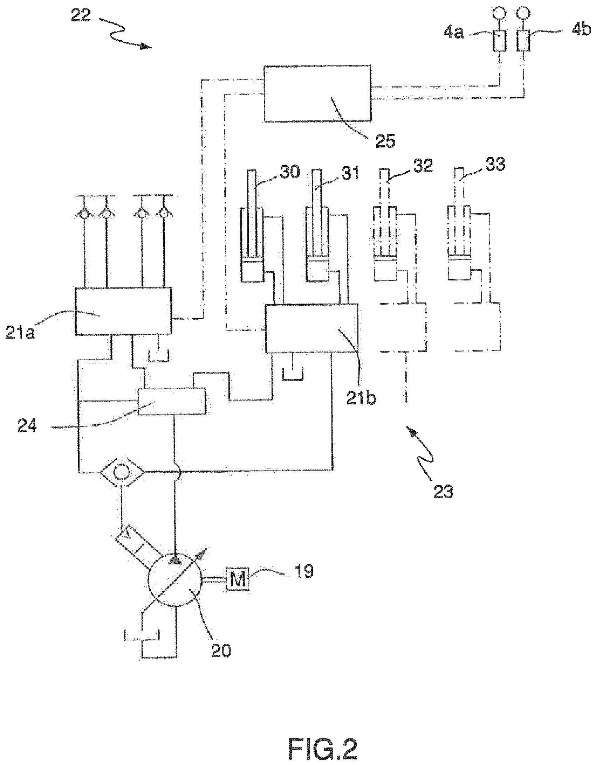

Figure 2 shows a circuit diagram 22 for a hydraulic system intended for the control of the work machine. The circuit diagram makes it clear that the work machine 1 is equipped with a three-phase electrical motor 19 that drives a hydraulic pump 20 with fixed displacement, and with which pump all of the operational devices of the machine are provided with hydraulic medium. In this simplified embodiment, only the first hydraulic cylinder 30 (the boom cylinder), the second hydraulic cylinder 31 and the third hydraulic cylinder 32 (the arm cylinders) of the manoeuvrable arm 10, together with a fourth hydraulic cylinder 33 (a breaker or pivot cylinder for the tool) will be described in detail. Between each operational device 30, 31, 32, 33 and the pump 20 there is placed a control valve 21a, 21b that controls the hydraulic fluid from the hydraulic pump 20 to the operational device such that the work machine can be manoeuvred in the desired manner through the influence of the two control levers 4a, 4b of the control unit 4, not only with respect to the motion of the manoeuvrable arm 10 but also with respect to driving the work machine 1 on its continuous tracks 8. The reference number 23 generally denotes a regulator structure that is a component of the hydraulic system for the control of the operational devices 30, 31, 32, 33 of the work machine. The full lines denote hydraulic lines, while the dashed-dot lines in Figure 2] denote lines for electrical signals. As has been described above, the hydraulic pump 20 is arranged to supply the operational devices of the manoeuvrable arm 10 with hydraulic medium. It is the task of the first flow-regulating valve 21a of the hydraulic system 23 to regulate the hydraulic flow to a hydraulically powered tool, in this case a demolition hammer 14, and the valve is connected hydraulically to the pump 20 through a valve 24 that sets priorities, and electrically to a computer unit 25 that is a component of the CAN system. The valve 24 that sets priorities in the present embodiment is set to always give priority to the hydraulic flow to the tool (the hydraulic demolition hammer) before other consumers. This means that if the demolition hammer 14 and the operational devices 30, 31, 32, 33 of the manoeuvrable arm 10 are used at the same time, it is the demolition hammer that will dominate, or that will have priority. The operational devices are activated slowly, and the manoeuvrable arm will move somewhat more slowly. This setting of priorities is previously known, and it is carried out fully hydraulically.

The hydraulic system 23 comprises further a second flow-regulating valve 20b in the form of a manoeuvrable arm valve that is set to regulate the hydraulic flow to the operational devices of the work machine, i.e. to the first cylinder 31 (the boom cylinder), the second 32 and the third 33 arm cylinders, and the fourth cylinder 34 that constitutes the breaker or pivot cylinder for the supported tool 14. Through the influence of a slider (not shown in the drawings) that is a component of the relevant control valve 21a, 21b, it is possible to obtain a pre-determined flow out to an operational device through the lines. The slider is manoeuvred electrically and is displaced a pre-determined distance in the valve 21a, 21b when a lever 4a, 4b on the control unit 4 is operated. It should be understood that the displacement of the slider in the valve 21a, 21b is proportional to the displacement of the lever 4a, 4b. The computer unit 25 is connected to the said first and second control valves 21a, 21b for the regulation of these. The levers 4a, 4b, are connected to the computer unit 25, as is the control unit 4 in its entirety. The hydraulic system 23 is of the type that senses the load applied, and this means that the pump 20 supplies fluid only when it is required and only to the locations at which it is required. As has been mentioned above, the volume of flow of the hydraulic medium to each control valve 21a, 21b is proportional to the displacement of the lever, and the possibility of controlling and regulating this proportionality in the hydraulic system 23 of CAN-type is described below in more detail. It is, however, normally the case that the said levers give a hydraulic flow from the control valves 21a, 21b that is proportional to the displacement. As has been mentioned above, one advantage of this known type of hydraulic system of CAN-type that uses an electrical control and monitoring system with integral software is that the hydraulic system can be programmed to behave in different ways. The programming takes place through the control computer 25 whereby valve-control curves stored in this computer determine the degree of opening of the sliders on the displacement of the levers. Just as usual, the displacement of the levers 4a, 4b controls the speed of an output cylinder or the rotation of a motor when displaced. The software makes it possible through a process known as "parameter adjustment" to change and adapt the control curves that the hydraulic system 23 uses. The control curves can be so adapted that the proportionality between the displacement of the lever and the motion of the slider in the control valve 21a, 21b is changed, and thus also the volume of flow of hydraulic medium that is supplied to the relevant operational device 30, 31, 21, 33 is changed.

It has proved to be possible to solve the problems of inadequate electricity distribution grids and grids that cannot supply the required amount of energy for work machines of this type through achieving, by means of the software of the control system, an operating mode that can be selected by the operator, which operating mode offers lower power. With the work machine set in the mode with lower power, a displacement of the levers that is experienced by the operator as normal will result in the control valves 21a, 21b supplying only a reduced volume of flow to the operational devices. Another way of saying this is that, in cases in which the electricity distribution grid at the location is not able to supply the required power (current), the work machine can in a simple manner be set by the operator in an operating condition in which the work machine can be operated at reduced power. This selectable power mode with a reduced volume of hydraulic medium is obtained through parameter adjustment of the valve-control curves that are stored in the control computer 25 of the hydraulic system 23, such that the proportionality between displacement of a lever and the motion of a slider in the control valve 21a, 21b is experienced as normal by the operator, while involving the volume of flow of hydraulic medium to the operational devices being limited. In order to make it easier for the operator 3, the work machine 1 is placed into the reduced-power mode by means of selectable menus in the control unit 4.

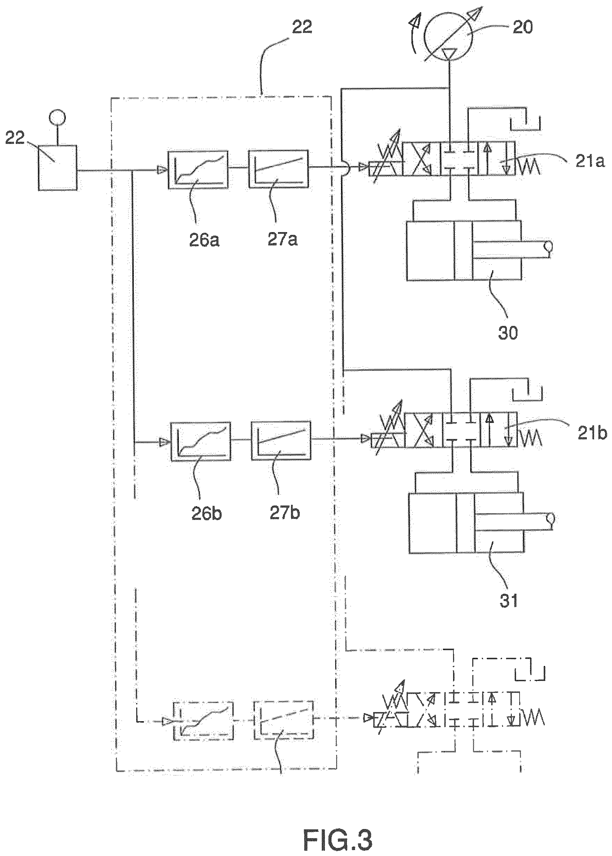

Figure 3 shows the hydraulic system 23 in more detail and, as the drawing makes clear, the circuit diagram of electrohydraulic valve blocks is denoted by 22, which valve blocks, together with the control computer 25, control and regulate the motion of the first and second operational devices of the work machine, i.e. the first cylinder 30 (the boom cylinder) and the second arm cylinder 31. The electrical operation of the valves 21a, 21b is carried out by the computer unit 25. Any other hydraulic cylinders that are components of the manoeuvrable arm 10 are controlled in a similar manner by further valve sections in the block: one further block is suggested by dash-dot contour lines in Figure 3. One of the two control levers 4a that are components of the control unit 4 forms a first signal transmitter of the commands of the operator to be sent to the computer unit 25. Control signals are produced by the electronic control lever 4a, which signals are led to the computer unit 25 and from this unit an amount of hydraulic flow that is predetermined by the valve-control curves 26a, 26b is transmitted to the relevant operational devices 30, 31 through the control valve 22b. The control lever 4a communicates with the control unit 22 and with relevant other components through an integrated CAN interface. In a similar manner, parameterisation of the program functions can be carried out through the CAN interface, with, for example, a portable service computer connected to the control computer 25. Resetting the work machine 1 from normal operation to the operating condition in which power limitation is on is activated by the operator with the aid of the menus of the control unit 4, which commands are received through digital inputs at the control computer 25. The CAN signals and the commands at the digital inputs are processed in task and main task, and they start and dismiss control routines in the control computer 25. The program routines control through PWM outputs proportional magnets in the electrohydraulic valves in the blocks 21, 21b. Valve control curves 26a, 26b are stored in the computer unit 25 in the form of software for each one of the relevant operational devices 30, 31 and for any other operational devices. The control sequences for normal operation and for power-limiting operation are divided into two groups, namely one group with pre-programmed valve-control curves 26a, 26b for each relevant operational cylinder 31, 32. The motions are controlled based on the selected operating mode with the pre-programmed valve-control curves 26a, 26b for the relevant operational cylinder. Furthermore, correction factor curves 27a and 27b are available, the task of which is to adjust the parameters of the valve-control curves 26a, 26b by displacing these in a suitable manner such that the output flow of hydraulic medium from the control valves 22a, 22b is reduced in a pre-determined manner. The correction factor curves 27a, 27b are determined based on the calculated volume of flow that the hydraulic system can supply at a pre-determined maximal amount of available energy. The correction factor curves 27a, 27b compensate and correct the valve-control curves 26a, 26b such that the operational devices 30, 31 of the manoeuvrable arm, and any other devices present, can carry out their control and actuator motion with a limited volume of flow.

Figure 4 shows using symbols the working modes into which the machine has been placed. With the work machine 1 set into the position for mode selection of operating the work machine 1 at reduced power ("power-limiting"), the symbol for selection of operating condition is displayed, whereby the display 4c is illuminated, and on activation of the function in its "On" mode, this is indicated of the display 4c of the control unit 4.

## Claims

1. A remote-controlled, electrically driven work machine (1), comprising;
- a portable control unit (4) for remote control of the work machine, wherein the work machine further comprises,
- a control computer (25) remotely controlled by the portable control unit (4)
- operational devices (30, 31, 32, 33) driven by a flow of hydraulic fluid,
- a hydraulic control system (22) that supplies driving flow to the operational devices (30, 31, 32, 33) of the work machine, by means of electrically controlled control valves (21a, 21b) **characterised in that** the hydraulic control system (22) can be reset from a normal operating mode to an operation mode with limited power, whereby the volume of flow of the hydraulic medium to the operational devices (30, 31, 32, 33) is limited through parameter adjustment of control curves (26a, 26b) that the programable hydraulic system (22) that is based on a CAN bus uses to regulate an opening of the electronically controlled control valves (21a, 21b) for passage through them of hydraulic flow to the operational devices (30, 31, 32, 33).

2. The control device according to claim 1, whereby the parameter adjustment of the valve-control curves (26a, 26b) takes place through the influence of correction factor curves (27a, 27b) that are stored as software in the control computer (25).

3. The control device according to any one of claims 1-2, whereby resetting from the normal operating mode for the work machine to an operating mode with limited power takes place directly through selectable menus and buttons (4d, 4e) in the portable control unit (4).

4. The control device according to any one of claims 1-3, whereby the valve-control curves (26a, 26b) are so adapted that the proportionality between lever displacement and the motion of a slider that is a component of the control valves valve (21a, 21b) is modified by the influence of correction-factor curves (27a, 27b) such that the volume of flow of hydraulic medium that is supplied to the relevant operational device (30, 31, 32, 33) is reduced.

5. The control device according to any one of claims 1-4, whereby the correction-factor curves (27a, 27b) that, stored as software in the control computer (25), are adapted such that they allow, when the operating mode with limited power is selected, a work machine to be connected and driven by an electrical supply grid that is fused only for a maximal output of sixteen (≤16 A) amps of grid current.

## Patentansprüche

1. Ferngesteuerte, elektrisch angetriebene Arbeitsmaschine (1), umfassend:
- eine transportable Steuerungseinheit (4) zur Fernsteuerung der Arbeitsmaschine, wobei die Arbeitsmaschine ferner umfasst:
- einen Steuerungscomputer (25), der durch die transportable Steuerungseinheit (4) ferngesteuert wird,
- Arbeitsvorrichtungen (30, 31, 32, 33), die durch einen Strom von Hydraulikfluid angetrieben werden,
- ein Hydrauliksteuerungssystem (22), das den Arbeitsvorrichtungen (30, 31, 32, 33) der Arbeitsmaschine mittels elektrisch gesteuerter Steuerventile (21a, 21b) einen Antriebsstrom zuführt,
**dadurch gekennzeichnet, dass** das Hydrauliksteuerungssystem (22) aus einem Normalbetriebsmodus in einen Betriebsmodus mit begrenzter Leistung zurückgesetzt werden kann, wobei das Volumen von Strom des Hydraulikmediums zu den Arbeitsvorrichtungen (30, 31, 32, 33) durch Parametereinstellung von Steuerungskurven (26a, 26b), welche das auf einem CAN-Bus basierende, programmierbare Hydrauliksystem (22) zur Regulierung einer Öffnung der elektronisch gesteuerten Steuerventile (21a, 21b) für den Durchlass eines Hydraulikstroms durch sie zu den Arbeitsvorrichtungen (30, 31, 32, 33) nutzt, begrenzt wird.

2. Steuerungsvorrichtung nach Anspruch 1, wobei die Parametereinstellung der Ventilsteuerungskurven (26a, 26b) durch den Einfluss von Korrekturfaktorkurven (27a, 27b), die als Software im Steuerungscomputer (25) gespeichert sind, erfolgt.

3. Steuerungsvorrichtung nach einem der Ansprüche 1-2, wobei das Zurücksetzen der Arbeitsmaschine aus dem Normalbetriebsmodus in einen Betriebsmodus mit begrenzter Leistung direkt durch auswählbare Menüs und Buttons (4d, 4e) in der transportablen Steuerungseinheit (4) erfolgt.

4. Steuerungsvorrichtung nach einem der Ansprüche 1-3, wobei die Ventilsteuerungskurven (26a, 26b) so angepasst sind, dass die Proportionalität zwischen Hebelverlagerung und der Bewegung eines Schiebers, der eine Komponente der Steuerventile (21a, 21b) ist, durch den Einfluss von Korrekturfaktorkurven (27a, 27b) modifiziert wird, so dass das Volumen von Strom von Hydraulikmedium, das der betreffenden Arbeitsvorrichtung (30, 31, 32, 33) zugeführt wird, reduziert ist.

5. Steuerungsvorrichtung nach einem der Ansprüche 1-4, wobei die Korrekturfaktorkurven (27a, 27b), die als Software im Steuerungscomputer (25) gespeichert sind, so angepasst sind, dass sie, wenn der Betriebsmodus mit beschränkter Leistung ausgewählt ist, das Anschließen und Antreiben einer Arbeitsmaschine über ein elektrisches Versorgungsnetz, das nur für eine maximale Abgabe von sechzehn Ampere (≤ 16 A) Netzstrom abgesichert ist, ermöglichen.

## Revendications

1. Machine de travail électrique télécommandée (1), comprenant ;
- une unité de commande portable (4) pour la commande à distance de la machine de travail, dans laquelle la machine de travail comprend en outre,
- un ordinateur de commande (25) télécommandé par l'unité de commande portable (4)
- des dispositifs opérationnels (30, 31, 32, 33) entraînés par un écoulement de fluide hydraulique,
- un système de commande hydraulique (22) qui fournit un écoulement d'entraînement aux dispositifs opérationnels (30, 31, 32, 33) de la machine de travail, au moyen de vannes de commande à commande électrique (21a, 21b)
**caractérisée en ce que** le système de commande hydraulique (22) peut être réinitialisé d'un mode de fonctionnement normal à un mode de fonctionnement à puissance limitée, moyennant quoi le volume d'écoulement du fluide hydraulique vers les dispositifs opérationnels (30, 31, 32, 33) est limité par le réglage des paramètres des courbes de commande (26a, 26b) que le système hydraulique programmable (22) qui est basé sur un bus CAN utilise pour réguler une ouverture des vannes de commande à commande électronique (21a, 21b) pour le passage à travers celles-ci d'écoulement hydraulique vers les dispositifs opérationnels (30, 31, 32, 33).

2. Dispositif de commande selon la revendication 1, moyennant quoi le réglage des paramètres des courbes de commande de vanne (26a, 26b) s'effectue par l'influence de courbes de facteur de correction (27a, 27b) qui sont stockées sous forme de logiciel dans l'ordinateur de commande (25).

3. Dispositif de commande selon l'une quelconque des revendications 1 à 2, moyennant quoi la réinitialisation du mode de fonctionnement normal de la machine de travail à un mode de fonctionnement à puissance limitée s'effectue directement via des menus et des boutons sélectionnables (4d, 4e) dans l'unité de commande portable (4).

4. Dispositif de commande selon l'une quelconque des revendications 1 à 3, moyennant quoi les courbes de commande de vanne (26a, 26b) sont adaptées de telle sorte que la proportionnalité entre le déplacement du levier et le mouvement d'un curseur qui est un composant des vannes de commande (21a, 21b) est modifié par l'influence de courbes de facteur de correction (27a, 27b) de sorte que le volume d'écoulement de milieu hydraulique qui est fourni au dispositif opérationnel concerné (30, 31, 32, 33) est réduit.

5. Dispositif de commande selon l'une quelconque des revendications 1 à 4, moyennant quoi les courbes de facteur de correction (27a, 27b) qui, stockées sous forme de logiciel dans l'ordinateur de commande (25), sont adaptées de telle sorte qu'elles permettent, lorsque le mode de fonctionnement à limitation de puissance est sélectionné, à une machine de travail d'être connectée et entraînée par un réseau d'alimentation électrique qui n'est conçu que pour une puissance maximale de seize (<16 A) ampères de courant de réseau.
